# EUROPÄISCHE PATENTSCHRIFT

(11) **EP 2 282 932 B1**
(45) Veröffentlichungstag und Bekanntmachung des Hinweises auf die Patenterteilung: **06.02.2013**
(21) Anmeldenummer: 09741741.4
(22) Anmeldetag: 06.05.2009
(51) Int. Cl.: B64C 39/00, B64C 11/00

(54) **PROPELLERVORRICHTUNG SOWIE FAHRZEUGANTRIEBSEINRICHTUNG UND ENERGIEUMWANDLUNGSEINRICHTUNG**
PROPELLER DEVICE, VEHICLE DRIVE UNIT AND ENERGY CONVERSION UNIT
DISPOSITIF À HÉLICE ET SYSTÈME D'ENTRAÎNEMENT DE VÉHICULE ET SYSTÈME DE CONVERSION D'ÉNERGIE

(30) Priorität: 06.05.2008 DE 102008022384
(43) Veröffentlichungstag der Anmeldung: 16.02.2011
(73) Patentinhaber: Grande, Bernd, 12589 Berlin (DE)
(72) Erfinder: Grande, Bernd, 12589 Berlin (DE)
(74) Vertreter: Bittner, Thomas L.
(86) Internationale Anmeldenummer: PCT/DE2009/000605
(87) Internationale Veröffentlichungsnummer: WO 2009/135468

(56) Entgegenhaltungen:
- GB-A- 577 958

## Beschreibung

Die Erfindung betrifft eine Propellervorrichtung sowie eine Fahrzeugantriebseinrichtung und eine Energieumwandlungseinrichtung.

### Hintergrund der Erfindung

Eine Vortrieb oder Schub erzeugende Strömung tritt beispielsweise hinter dem Propeller eines Schiffes oder eines Luftfahrzeuges, hinter der Austrittsdüse einer Flugzeugstrahlturbine und unter dem Rotor eines Hubschraubers auf. Der Schub wird hierbei durch den Geschwindigkeitsmehrbetrag der beschleunigten Strömung gegenüber der Fahr- oder der Fluggeschwindigkeit bewirkt. Er ist umso größer, je höher dieser Geschwindigkeitsmehrbetrag und je größer der Strömungsquerschnitt ist. Die Schuberzeugung selbst ist hierbei immer das Ergebnis der Ausnutzung einer Auftriebskomponente von nahezu senkrecht zur Strömung um eine gemeinsame Mittelachse rotierenden Auftriebskörpern, beispielsweise Propellerflügeln, Rotorblättern oder Turbinenschaufeln. Eine gleichzeitige Auftriebserzeugung zur Kompensation des Fahrzeuggewichtes ist, soweit notwendig - beim Schiffskörper im Wasser oder Luftschiff im Allgemeinen nicht - nur über die Zusatzeinrichtung eines Tragflügels oder die Schwenkung der Schubrichtung mittels entsprechender Zusatzkomponenten, zum Beispiel Schwenkpropeller oder Schwenkdüsen, möglich.

Die Anwendung dieser Systeme zur Erzeugung und / oder Steuerung von Schub und Auftrieb erfährt jedoch in verschiedener Hinsicht Einschränkungen. So wird der Strömung mittels der rotierenden Auftriebskörper neben der gewünschten Ablenkung auch ein Drall erteilt, der sich bei der Ausnutzung der Strömung zur Erzeugung des Schubes und / oder des Auftriebes ungünstig bemerkbar macht.

Daher wurden bereits Schub und Auftrieb erzeugende Systeme entwickelt, die die allgemein bekannteste Symbiose von Auftrieb und Vortrieb erzeugende Vorrichtung, einen Vogelflügel, zum Vorbild haben und unter dem Begriff "Ornithopter" bekannt sind (http://www.ornithopter.de/gelenk.htm, Gelenkschlagflügel, 21.11.2006; http://www.omithopter.de/fluegel.htm, Andere Schlagflügelkonstruktionen, 21.11.2006; http://www.omithopter.de/methoden.htm, Grundlegende Methoden zur Schlagflügelverwindung, 21.11.2006; http://www.ornithopter.de/prinzip.htm, Das Flugprinzip der Omithopter, 21.11.2006). Allerdings konnten Ornithopter bisher keine großtechnischen Anwendungen finden.

Auch wurden bereits Systeme entwickelt, die den oben genannten Drall vermeiden. Hierbei handelt es sich vornehmlich um Systeme, die den Knoller-Betz-Effekt ausnutzen, indem diese die Strömung durch einen in ihr quer gelagerten und bewegten stromlinienförmigen und meist symmetrischen Ablenkkörper initiieren und beeinflussen. Die Auslenkungen dieser Ablenkkörper erfolgen dabei mittels Schwenkungen um dessen quer gelagerte (innerhalb bzw. außerhalb des Ablenkkörpers) Drehachse (Pendelruderprinzip) (DE 38 15 283 A1) und / oder durch Auf- und Abbewegung mittels Hydraulikzylinder (DBP 1 025 275) oder Seilzügen (DE 37 01 151 A1, Zusatz zu P 36 08 991.5).

Es wurde auch schon vorgeschlagen, zwecks Erhöhung der Schwenkfrequenz sowie zur Frhöhung der Ausschlagamplitude die quer gelagerte Schwenkachse des Ablenkkörpers exzentrisch angelenkt rotieren zu lassen. Dabei bewegt sich die quer gelagerte Schwenkachse dann quasi auf der Oberfläche eines fiktiven senkrecht zur Strömung drehenden Zylinders und die Profilsehne des Ablenkkörpers wird mittels eines Getriebes annähernd parallel zur Strömung gehalten. Bekanntester Vertreter dieser Art Antriebe ist der Wellpropeller (W. Schmidt: Der Wellpropeller, ein neuer Antrieb für Wasser-, Land- und Luftfahrzeuge Z. Flugwiss. 13(1965), Heft 12. S. 472-479 und DD 148 616). Dabei ist eine Schubvektorsteuerung nicht vorgesehen und eine Nutzung von Auftriebskräften für die Gewichtskompensation nicht möglich. Dieser Antrieb ist daher vorzugsweise im Zusammenwirken mit einem nachgeordneten strömungsglättenden Profilkörper für die reine Schuberzeugung gedacht, zum Beispiel beim "Delphinluftschift" (U. Queck und W. Schmidt: Delphine der Luft Z. Flieger-Revue 6/1970, S. 226-233).

Deshalb wurde auch schon vorgeschlagen, diesen Ablenkkörper oder die mehreren rotierenden Ablenkkörper wie beim Wellpropeller zwischen zwei parallel gegenüberliegenden Scheiben exzentrisch von deren Mittelachse aus angelenkt quer zur Strömung rotieren zu lassen, aber zusätzlich noch während der Rotation gezielt elektronisch einzeln über entsprechende Stellglieder anzusteuern, um in jedem Drehwinkel des Rotors einen Impuls in Richtung des gewünschten Schubvektors zu erzeugen (DE 42 17 374 und DE 43 20 625 A1). Praktische Umsetzungen dieses Antriebes sind bisher nicht bekannt geworden. Nur eine mechanische Lösung als Sonderform dieser Art Schubvektorsteuerung ist bekannt als Voith-Schneider-Propeller, beschränkt auf Schiffsantriebe.

Weiterhin wurde ein modifizierter Wellpropellerantrieb mit nachgeordnetem Profilkörper vorgeschlagen, der sich als komplette Einheit schwenken lassen soll, um so eine Vektorsteuerung zu ermöglichen (DD 300 703 A7).

Ferner ist ein Leichtflugzeug mit manuellem Antrieb eines halbkreisförmig geführten Schlagflügels bekannt, der neben dem Vortrieb auch den Auftrieb erzeugen soll (DD 292 186 A5).

Nachteilig an den bisher vorgestellten Antriebseinrichtungen ist zum einen ihre meist zu geringe Effizienz infolge zu geringer Schlagfrequenz, ihre Beschränkung auf die Schuberzeugung und ihrer Beschränkung eines guten zu erzielenden Wirkungsgrades auf bestimmte Drehzahlbereiche. Des Weiteren weisen die Rotationssysteme eine reduzierte Effizienz infolge der ineffektiven Phasen bei der Kreisbewegung der / des Ablenkkörpers auf, welche sich im rückdrehenden Rotationsabschnitt bemerkbar machen (ähnlich denen beim Hubschrauberrotor), sowie einen zyklisch schwankenden Abstand zum Fahrzeugkörper.

Darüber hinaus ist die Auftrieb erzeugende Fläche der einzelnen Ablenkkörper (zumindest bei einer Mehrfachanordnung) im Wellrotor weitaus kleiner, weil sowohl die Profiltiefe beschränkt ist als auch damit die Profildicke und damit aus Festigkeitsgründen auch die Spannweite.

Auch ist aufgrund des Rotationskreises ein relativ großer Hebelarm zur Anlenkung dieser Antriebe am Fahrzeug-/ Flugzeugrumpf nachteilig hinsichtlich Gewicht, Kräften und Momenten.

Das Dokument GB 577 958 A betrifft eine Propellervorrichtung, mit einem Strömungsprofilkörper und einer Mehrfachexzenteranordung.

### Zusammenfassung der Erfindung

Die der Erfindung zugrunde liegende Aufgabe ist es, eine verbesserte Propellervorrichtung zu schaffen, welche die oben genannten Nachteile bekannter Propellervorrichtungen vermeidet und eine hohe Frequenz eines laufenden Wechsels einer Bewegungsrichtung eines Strömungsprofilkörpers bei hoher Leistungsumsetzung und variabler Steuerbarkeit ermöglicht. Erfindungsgemäß wird diese Aufgabe durch eine Propellervorrichtung nach Anspruch 1 sowie eine Fahrzeugantriebseinrichtung nach Anspruch 13 und eine Energieumwandlungseinrichtung nach Anspruch 14 gelöst.

Die Erfindung umfasst den Gedanken einer Propellervorrichtung mit einem einem Propeller zugeordneten Strömungsprofilkörper und einer an den Strömungsprofilkörper funktionell gekoppelten Mehrfachexzenteranordnung, die zwei miteinander gekoppelte und gegenläufig drehbare Exzenterbauteile aufweist und die konfiguriert ist, eine gemeinsame, gegenläufige Drehbewegung der Exzenterbauteile in eine oszillierende Bewegung des Strömungsprofilkörpers entlang einer Bewegungsbahn zwischen zwei Endstellungen zu wandeln, und umgekehrt.

Die Erfindung umfasst weiterhin den Gedanken der Verwendung der Propellervorrichtung in einer Fahrzeugantriebseinrichtung oder einer Energieumwandlungseinrichtung. Vorteilhafte Ausgestaltungen der Erfindung sind Gegenstand abhängiger Ansprüche.

Erfindungsgemäß sind ein Strömungsprofilkörper und eine Mehrfachexzenteranordnung mit zwei Exzenterbauteilen derart miteinander gekoppelt, so dass der Strömungsprofilkörper beim gegenläufigen Drehen der Exzenterbauteile eine oszillierende Bewegung zwischen zwei Endstellungen ausführt und eine oszillierende Bewegung des Strömungsprofilkörpers zwischen den zwei Endstellungen zu einer gegenläufigen Drehbewegung der Exzenterbauteile führt.

Bei der erfindungsgemäßen Verwendung der Propellervorrichtung zum Antrieb eines Fahrzeuges werden die zwei Exzenterbauteile verhältnisgleich gegenläufig gedreht. Die Drehbewegung kann manuell erfolgen oder aber mittels eines Motors oder mittels mehrerer koordiniert zusammenwirkender Motoren. Hierbei kann es sich beispielsweise um einen Elektro-, einen Benzin- oder einen Gasmotor handeln. Der Motor ist mittels bekannter Kopplungsmechanismen an die Exzenterbauteile gekoppelt. Bekannte Kopplungsmechanismen sind beispielsweise Zahnräder, Zahnriemen oder Getriebe, insbesondere Kettengetriebe, Walzkörpergetriebe, Riemengetriebe oder beliebige andere Vorrichtungen zum Übertragen und / oder Umwandeln von Drehzahlen oder Drehmomenten. Mittels der erfindungsgemäßen Propellervorrichtung wird dann die gegenläufige Drehbewegung der Exzenterbauteile in eine oszillierende Bewegung bzw. oszillierende Hubbewegung des Strömungsprofilkörpers entlang einer Bewegungsbahn zwischen zwei Endstellungen gewandelt. Der Strömungsprofilkörper, welcher vorzugsweise ein Tragflächenprofil aufweist, bewegt sich somit durch ein Medium, beispielsweise Luft, Gas, Wasser oder ein Fluid, wodurch ein Auftrieb und / oder ein Vorwärtsschub erreicht wird, welcher das Fahrzeug antreibt. Bei dem Fahrzeug kann es sich um ein Luft-, Wasser-, Unterwasser- oder ein Landfahrzeug handeln.

Bei der erfindungsgemäßen Verwendung der Propellervorrichtung zum Wandeln von Energie wird die Propellervorrichtung in ein strömendes Medium, beispielsweise ein Gas, ein Gasgemisch, eine Flüssigkeit, Dampf oder ein Fluid, eingebracht. Das den Strömungsprofilkörper, welcher vorzugsweise ein Tragflächenprofil, vorzugsweise ein symmetrisches Tragflächenprofil, aufweist, an- und / oder umströmende Medium verlagert den Strömungsprofilkörper aus einer Ruhelage. Aufgrund der erfindungsgemäßen Kopplung des Strömungsprofilkörpers mit der Mehrfachexzenteranordnung wird der Strömungsprofilkörper somit auf eine Bewegungsbahn zwischen zwei Endstellungen gezwungen. Die resultierende oszillierende Bewegung wird dann in eine gemeinsame, gegenläufige Drehbewegung der Exzenterbauteile gewandelt. Die gegenläufige Drehbewegung der Exzenterbauteile kann nun beispielsweise einen Generator zur Stromerzeugung antreiben. Somit wird kinetische Energie des strömenden Mediums in elektrische Energie gewandelt. Beispielsweise können die zwei Exzenterbauteile aber auch an eine Pumpe gekoppelt sein, welche mittels der Drehbewegung der Exzenterbauteile angetrieben wird. Die Pumpe kann dann beispielsweise Wasser von einem ersten Niveau auf ein zweites höheres Niveau pumpen. Somit wurde die kinetische Energie des strömenden Mediums in potenzielle Energie des Wassers gewandelt. Vorzugsweise kann die Mehrfachexzenteranordnung mit einer Wärmekraftmaschine, einem Sterlingmotor oder einer Maschine, welche nach dem Camotkreisprozess arbeitet, gekoppelt sein.

In der Erfindung ist vorgesehen, dass die Bewegungsbahn als eine geradlinige Bewegung oder ellipsenförmige Bewegung gebildet ist. Bevorzugterweise sind die Exzenterbauteile mit gleicher Exzentrizität gelagert. Insbesondere sind die Exzenterbauteile für eine gleiche Drehgeschwindigkeit mit entgegengesetzter Drehrichtung konfiguriert. Gleiche Drehgeschwindigkeit meint hierbei die Drehgeschwindigkeit gegenüber dem Koordinatensystem der jeweiligen Exzenterachse, wenn die Ausrichtung dieser Koordinatensysteme untereinander als gleich bleibend festgelegt wird. Beispielsweise ist die Bewegungsbahn gerade dann einer geradlinigen Bewegung entsprechend gebildet, wenn die Exzenterbauteile mit gleicher Exzentrizität gelagert und für eine gleiche Drehgeschwindigkeit konfiguriert sind. Hingegen ist die Bewegungsbahn einer ellipsenförmigen Bewegung entsprechend gebildet, wenn die Exzenterbauteile mit unterschiedlicher Exzentrizität gelagert sind. Bevorzugterweise umfassen die zwei Exzenterbauteile radförmige Schwungmassenscheiben.

Eine weitere bevorzugte Ausgestaltung der Erfindung weist einen Einstellmechanismus auf, der konfiguriert ist, die Lage einer Längsachse eines Querschnittsprofils des Strömungsprofilkörpers relativ zu einer Verbindungsgeraden zwischen den zwei Endstellungen einzustellen. Somit ist es ermöglicht, die Lage der Längsachse in bestimmungsgemäßen Grenzen zu variieren. Die Lage kann beispielsweise ein mittels der Längsachse und der Verbindungsgeraden gebildeter Einstellwinkel oder Anstellwinkel sein. Hierdurch ist es ermöglicht, den Strömungsprofilkörper relativ zu einem den Strömungsprofilkörper an- und / oder umströmenden Medium auszurichten.

In einer bevorzugten Ausgestaltung des Einstellmechanismus ist der Strömungsprofilkörper mit einem kaskadenförmigen Wechselgetriebe gekoppelt. Ein kaskadenförmiges Wechselgetriebe umfasst in einer möglichen Ausführung mehrere einzelne Elemente, beispielsweise mehrere hintereinander gekoppelte Zahnräder oder Riemengetriebe, wobei eine Drehung eines Zahnrads oder Riemengetriebes weitere Drehungen bei den restlichen Zahnrädern oder Riemengetrieben auslöst. Das kaskadenförmige Wechselgetriebe ist dann beispielsweise mit einer insbesondere als eine Welle oder Schnecke eines Schneckenradgetriebes ausgebildeten Hubstange gekoppelt. Wenn die Hubstange um ihre Mittelachse gedreht wird, drehen sich auch die einzelnen Elemente des kaskadenförmigen Wechselgetriebes und letztlich somit auch der Strömungsprofilkörper. Vorzugsweise ist der Strömungsprofilkörper im Bereich einer Querachse an das kaskadenförmige Wechselgetriebe gekoppelt, beispielsweise ist die Querachse zentrisch fluchtend an einem Zahnrad des kaskadenförmigen Wechselgetriebes angeordnet. Die Querachse kann beispielsweise als eine Hohlachse gebildet sein. Vorzugsweise ist die Querachse so angeordnet, dass die Querachse mit dem Schwerpunkt des Strömungsprofilkörpers zusammenfällt. Insbesondere ist die Querachse vor dem Neutralpunkt des Querschnittprofils des Strömungsprofilkörpers angeordnet. Die Hubstange ist bevorzugterweise mit einem Getrieberad gekoppelt, welches beispielsweise von einem Antrieb eines Stellmotors angetrieben wird. Eine Kopplung der Hubstange mit dem Getrieberad kann beispielsweise dadurch erfolgen, dass an der Hubstange in einem Gleitbereich ein Profil bzw. ein Profilkörper gebildet ist, beispielsweise ein Dreikant-Außenprofil. Im Wesentlichen mittig des Gleitbereichs und im Wesentlichen zentrisch zu der Mittelachse der Hubstange ist das Getrieberad mit einem entsprechenden Gegenprofil, beispielsweise ein Dreikant-Innenprofil, als Achsbohrung angeordnet. Somit ist erreicht, dass die Hubstange eine translatorische Bewegung, das heißt in Richtung der Mittelachse, durch die Achsbohrung des Getrieberads ausführen kann und erst bei einer Drehung des Getrieberads das Profil mit dem Gegenprofil derart zusammenwirkt, dass sich die Hubstange dreht. Allerdings kann auch eine feste Verbindung des Getrieberads mit der Welle vorgesehen sein, beispielsweise mittels bekannter Befestigungsmittel wie Schrauben, Nieten, Nägel oder Klebemittel.

In einer anderen bevorzugten Ausgestaltung umfasst der Einstellmechanismus ein Planetenradgetriebe bzw. Planetengetriebe. Hierbei bildet ein außenverzahntes Zahnrad des kaskadenförmigen Wechselgetriebes ein zentrales Zahnrad bzw. Sonnenrad des Planetengetriebes. Um das zentrale Zahnrad sind mehrere als Zahnräder ausgebildete Planetenräder angeordnet, welche mit dem Sonnenrad zusammenwirken. Bevorzugterweise sind zwei Planetenräder gebildet, noch bevorzugterweise sind drei Planetenräder gebildet und noch bevorzugterweise sind fünf Planetenräder gebildet. Die Achsen der Planetenräder sind an einem Rundkörper eines Getrieberades starr befestigt, welches mittels bekannter Antriebe gedreht werden kann. Beispielsweise sind die Achsen der Planetenräder hier an einem Rundkörper eines Schneckerades eines Schneckenradgetriebes starr befestigt, wobei das Schneckenrad im Wesentlichen zentrisch fluchtend zu einer Mittelachse des Sonnenrads angeordnet ist. Wenn das Schneckenrad gedreht wird, beispielsweise mittels eines schrägverzahnten Zahnrades, insbesondere einer Schnecke, dreht sich entsprechend einem Übersetzungsverhältnis des Planetengetriebes das zentrale Zahnrad, wodurch die Lage des mit dem kaskadenförmigen Wechselgetriebe gekoppelten Strömungsprofilkörpers eingestellt wird. Das Schneckenrad kann insbesondere mittels eines Antriebs eines Stellmotors angetrieben sein.

Eine weitere bevorzugte Fortbildung der Erfindung sieht vor, dass die Lage der Längsachse des Querschnittsprofils bei der oszillierenden Bewegung feststehend gebildet ist. Bevorzugterweise ist die Lage mittels Arretierung des Antriebsrads des kaskadenförmigen Wechselgetriebes feststehend gebildet. Beispielsweise beträgt der Einstellwinkel etwa 90°.

Bei einer weiteren bevorzugten Ausführungsform der Erfindung ist ein Schwenkmechanismus gebildet, welcher konfiguriert ist, der oszillierenden Bewegung des Strömungsprofilkörpers zwischen den Endstellungen eine Schwenkbewegung der Längsachse des Querschnittsprofils des Strömungsprofilkörpers um eine Mittellage der Längsachse zu überlagern. In einer Ausführung umfasst der Schwenkmechanismus eine als eine Welle oder Schnecke eines Schneckenradgetriebes ausgebildete Hubstange, welche mit einem kaskadenförmigen Wechselgetriebe gekoppelt ist, wobei der Strömungsprofilkörper mit dem kaskadenförmigen Wechselgetriebe gekoppelt ist. Wenn die Hubstange in Richtung der Mittelachse der Hubstange translatorisch hin- und herbewegt wird, so wird diese translatorische Bewegung in eine Drehbewegung der einzelnen Elemente des kaskadenförmigen Wechselgetriebes gewandelt, wodurch dem Strömungsprofilkörper der translatorischen Bewegung der Hubstange entsprechend eine Schwenkbewegung beaufschlagt ist. In einer Ausführungsform ist die Hubstange an einen Taumelscheibenantrieb gekoppelt, welcher insbesondere von einem Hauptmotor angetrieben ist. Bevorzugterweise umfasst der Taumelscheibenantrieb einen an eine Taumelscheibe gekoppelten Kopplungsmechanismus, wobei der Kopplungsmechanismus konfiguriert ist, eine beispielsweise mittels des Hauptmotors gelieferte repetierende Schubbewegung auf die Hubstange einzuleiten. Bevorzugt sieht eine Fortbildung der Erfindung vor, dass der Kopplungsmechanismus einen an die Taumelscheibe gekoppelten Stößel aufweist, welcher in einer Linearführung geführt ist.

In einer bevorzugten Ausgestaltung der Erfindung kann vorgesehen sein, dass der Schwenkmechanismus ein innenverzahntes Zahnrad, bevorzugt ein Ringzahnrad, aufweist. Insbesondere umfasst das innenverzahnte Zahnrad einen exzentrisch auskragenden Nockenhebel. Es kann vorgesehen sein, dass an dem Nockenhebel eine Öse gebildet ist. Eine weitere Hubstange ist mit dem innenverzahnten Zahnrad gekoppelt, bevorzugterweise ist die weitere Hubstange an dem Nockenhebel angeordnet, insbesondere ist die weitere Hubstange an der Öse des Nockenhebels gelenkig angeordnet. In einem inneren Bereich des innenverzahnten Zahnrads ist ein Planetengetriebe gebildet. Insbesondere handelt es sich bei dem Planetengetriebe um das bereits von einer beispielhaften Ausführungsform des erfindungsgemäßen Einstellmechanismus umfasste und oben beschriebene Planetengetriebe. Mittels des Zusammenwirkens der inneren Zähne des innenverzahnten Zahnrades mit dem Planetengetriebe, insbesondere mit den Planetenrädern, wird eine Drehbewegung des innenverzahnten Zahnrades in eine Drehbewegung des Sonnenrades des Planetengetriebes und über die kaskadenförmigen Wechselgetriebe in eine Drehbewegung des Strömungsprofilkörpers gewandelt. Insbesondere ist die weitere Hubstange mit einem Taumelscheibenantrieb gekoppelt, welcher beispielsweise von dem Hauptmotor angetrieben ist.

In den oben beschriebenen Ausführungsformen kann vorgesehen sein, anstelle des Taumelscheibenantriebs ein Dämpfungssystem und / oder ein Federsystem mit der Hubstange bzw. der weiteren Hubstange zu koppeln. Eine Drehbewegung des Strömungsprofilkörpers führt zu einer translatorischen Bewegung in Richtung der Mittelachse der weiteren Hubstange. Die translatorische Bewegung wird dann mittels des Dämpfungssystems gedämpft und / oder mit einer mittels des Federsystems gebildeten Rückstellkraft beaufschlagt. Die gedämpfte und /oder mit der Rückstellkraft beaufschlagte translatorische Bewegung wird dann in eine entsprechende Drehbewegung des Strömungsprofilkörpers gewandelt. Bevorzugterweise umfasst das Dämpfungssystem Dämpfer, beispielsweise Stossdämpfer, Luftfederdämpfer, hydraulische Dämpfer oder Drehstossdämpfer. Bevorzugterweise kann das Federsystem Federn wie beispielsweise Schraubenfedern, Elastomerfedern, Gasdruckfedern, Schraubenfedern, Torsionsfedern, Biegefedern oder Ringfedern aufweisen. Insbesondere sind das Dämpfungssystem und das Federsystem mit einer einstellbaren Dämpfungscharakteristik bzw. einstellbaren Federcharakteristik gebildet. Beispielsweise ist ein Gasdruck eines Gases einer Gasdruckfeder einstellbar gebildet, so dass die translatorische Bewegung mehr oder weniger stark gedämpft werden kann. Eine gezielte Steuerung bzw. Beeinflussung der Drehbewegung des Strömungsprofilkörpers ist somit ermöglicht.

In einer bevorzugten Ausgestaltung der Erfindung kann auch eine Kombination eines erfindungsgemäßen Schwenkmechanismus mit einem erfindungsgemäßen Dämpfungssystem und / oder einem erfindungsgemäßen Federsystem vorgesehen sein.

Eine weitere bevorzugte Ausgestaltung der Erfindung weist einen Neigungsmechanismus auf, der konfiguriert ist, eine räumliche Lage der Verbindungsgeraden zwischen den Endstellungen einzustellen. Somit ist es ermöglicht, eine Neigung der mittels der Verbindungsgeraden und der Querachse des Strömungsprofilkörpers gebildeten Oszillationsebene einzustellen. Beispielsweise ist der Neigungsmechanismus konfiguriert, eine jeweilige Drehgeschwindigkeit der zwei Exzenterbauteile getrennt voneinander einzustellen bzw. dem Betrage nach voneinander abweichend einstellen zu können. Um die räumliche Lage der Verbindungsgeraden zu neigen, werden jeweils unterschiedliche Drehgeschwindigkeiten eingestellt, wodurch die räumliche Lage der Verbindungsgeraden eine Neigbewegung ausführt. Zum Stoppen der Neigbewegung wird dann wieder eine gleiche Drehgeschwindigkeit der Exzenterbauteile eingestellt. Beispielhaft kann diese Neigung mittels eines Oszillationsebenenschwenkgetriebes oder durch Drehzahlvariation einzelner Exzenterantriebsmotore erfolgen. Beispielsweise ist der Neigungsmechanismus konfiguriert, bei unabhängigen Mehrmotorenantrieb die Drehgeschwindigkeit des jeweiligen Antriebes der Exzenterbauteile den Betrage nach abweichend und unabhängig voneinander mittels direkter stufenloser Motorendrehzahlsteuerung oder mittels separater, voneinander unabhängiger stufenlos einstellbare Getriebestufen einzustellen. Bevorzugterweise ist der Neigungsmechanismus konfiguriert, bei ein- oder gekoppeltem zentralen Mehrmotorenantrieb die Drehgeschwindigkeit der jeweiligen Antriebsachsen und damit der Exzenterbauteile dem Betrage nach abweichend und unabhängig voneinander mittels eines Oszillationsebenenschwenkgetriebes einzustellen.

Bei einer anderen beispielhaften Ausführungsform der Erfindung weist die Mehrfachexzenteranordnung zwei weitere miteinander gekoppelte und gegenläufig drehbare Exzenterbauteile auf, wobei der Strömungsprofilkörper zwischen den zwei Exzenterbauteilen und den zwei weiteren Exzenterbauteilen angeordnet ist.

In einer anderen Ausgestaltungsform der Erfindung ist der Strömungsprofilkörper einer Tragfläche oder eines Tragflügels entsprechend gebildet. Insbesondere weist der Strömungsprofilkörper eine Oberflächenbeschichtung auf, welcher einen mittels eines strömenden Mediums gebildeten Reibungswiderstand minimierend gebildet ist. Beispielsweise kann der Strömungsprofilkörper auch ein Oberflächenprofil aufweisen, welches den Reibungswiderstand minimierend gebildet ist. Bevorzugterweise umfasst der Strömungsprofilkörper aktive und /oder passive Systeme zur Beeinflussung seiner Umströmung in Form von Verwindungssystemen und / oder ein- und ausfahrbaren sowie ausschlagbaren Elementen, beispielsweise Landeklappen, einen weiteren Strömungsprofilkörper, Querruder, Spoiler, Trimmruder oder Auftriebshilfen.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig. 1: eine schematische Darstellung einer Ausführungsform der Erfindung;
- Fig. 2: eine schematische Darstellung des Funktionsprinzips einer Ausführungsform der Erfindung;
- Fig. 3: eine schematische Darstellung eines Querschnitts einer Fortbildung der Ausführungsform in Fig. 2;
- Fig. 4: eine schematische Darstellung eines Querschnitts eines Neigungsmechanismus;
- Fig. 5: eine schematische Darstellung einer Ausführungsform eines Einstellmechanismus und zwei Ausführungsformen eines Schwenkmechanismus;
- Fig. 6: eine schematische Darstellung einer Ausführungsform eines weiteren Einstellmechanismus und zwei Ausführungsformen eines weiteren Schwenkmechanismus und
- Fig. 7: eine schematische Darstellung einer Ausführungsform eines Schwenkmechanismus.

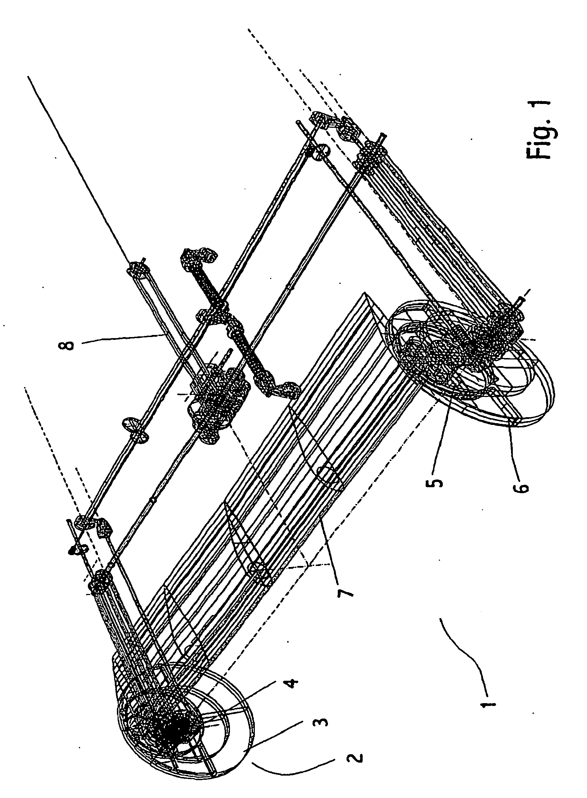

Fig. 1 zeigt eine Propellervorrichtung 1 mit einer Mehrfachexzenteranordnung 2. Die Mehrfachexzenteranordnung 2 umfasst zwei Exzenterbauteile 3 und 4 und zwei weitere Exzenterbauteile 5 und 6. Ein Strömungsprofilkörper 7 ist zwischen den zwei Exzenterbauteilen 3 und 4 und den zwei weiteren Exzenterbauteilen 5 und 6 angeordnet. Weiterhin ist an die Mehrfachexzenteranordnung 2 ein Riemengetriebe 8 zum Antreiben der zwei Exzenterbauteile 3 und 4 und der zwei weiteren Exzenterbauteile 5 und 6 gekoppelt.

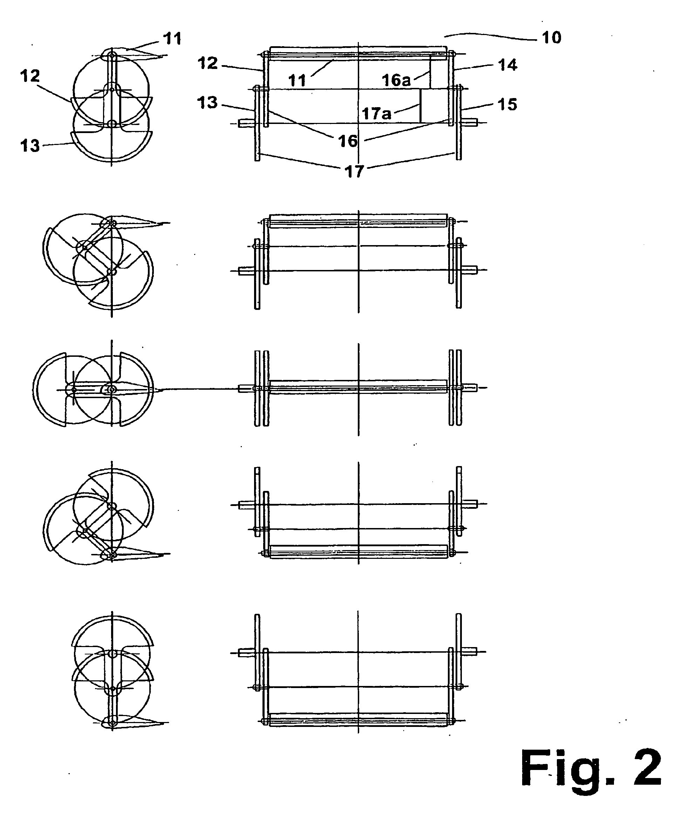

Das Funktionsprinzip einer Mehrfachexzenteranordnung im Sinne der Erfindung zeigt Fig. 2. Hierbei ist eine Propellervorrichtung 10 in verschiedenen Bewegungsphasen einer oszillierenden Bewegung eines Strömungsprofilkörpers 11 in einer Seitenansicht und in einer vorderen Ansicht dargestellt. Die Propellervorrichtung 10 weist zwei Exzenterbauteile 12 und 13 sowie zwei weitere Exzenterbauteile 14 und 15 auf, wobei der Strömungsprofilkörper zwischen den zwei Exzenterbauteilen 12 und 13 und den zwei weiteren Exzenterbauteilen 14 und 15 angeordnet ist. Die Exzenterbauteile 12 und 14 bilden ein inneres Exzenterpaar 16 mit einer inneren Exzentrizität 16a und die Exzenterbauteile 13 und 15 bilden ein äußeres Exzenterpaar 17 mit einer äußeren Exzentrizität 17a. Eine Querachse des Strömungsprofilkörpers 11 ist an einem äußeren Ende der inneren Exzentrizität 16a des inneren Exzenterpaares 16 drehbar angeordnet, vorzugsweise so, dass die Querachse mit dem Schwerpunkt des Strömungsprofilkörpers 11 zusammenfällt und vor dem Neutralpunkt des Profils des Strömungsprofilkörpers 11 liegt. Eine Rotationsachse der das innere Exzenterpaar 16 bildenden Exzenterbauteile 12 und 14 ist an einem äußeren Ende der das äußere Exzenterpaar 17 bildenden Exzenterbauteile 13 und 15 drehbar angeordnet. Die äußere und die innere Exzentrizität 16a und 17a weisen eine gleich große oder im wesentlichen annähernd gleich große Länge auf, wodurch eine lineare oder im wesentlichen annähernd lineare oszillierende Bewegung des Strömungsprofilkörpers 11 bei gleicher Drehgeschwindigkeit und entgegengesetzter Drehrichtung der Exzenterbauteile sicher gestellt ist.

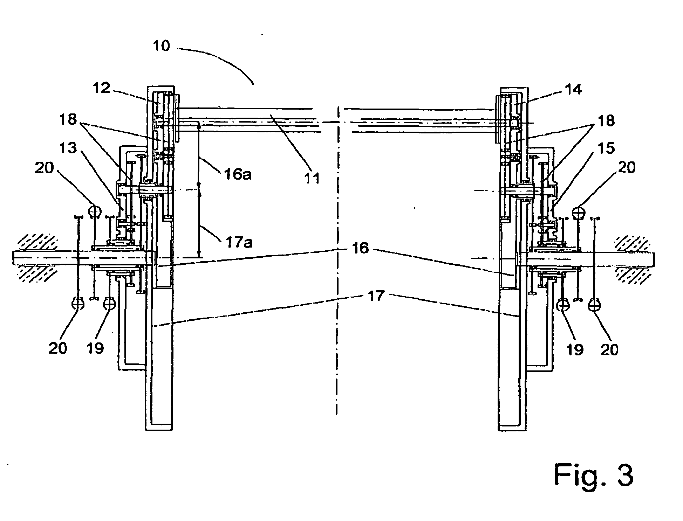

Fig. 3 zeigt einen Querschnitt einer Fortbildung der in Fig. 2 gezeigten Propellervorrichtung 10. Bei der in Fig. 3 gezeigten Fortbildung sind auf beiden Seiten der Propellervorrichtung 10 kaskadenförmige Wechselgetriebe 18 angeordnet, welche mit der Querachse des Strömungsprofilkörpers 11 gekoppelt sind. Die kaskadenförmige Wechselgetriebe 18 sind weiterhin mit Antriebsrädern 19 gekoppelt, welche mittels bekannten Motoren (nicht gezeigt) angetrieben sind. Die kaskadenförmige Wechselgetriebe 18 und die Antriebsräder 19 sind von einem Einstellmechanismus (nicht gezeigt) und einem Schwenkmechanismus (nicht gezeigt) umfasst. Des Weiteren umfasst die Propellervorrichtung 10 weitere Antriebsräder 20, welche mit den zwei Exzenterbauteilen 12 und 13 und den zwei weiteren Exzenterbauteilen 14 und 15 gekoppelt sind und die Exzenterbauteile 12 und 13 und die zwei weiteren Exzenterbauteilen 14 und 15 jeweils gegenläufig drehen. Auch die weiteren Antriebsräder 20 werden mittels bekannter Motoren (nicht gezeigt) angetrieben.

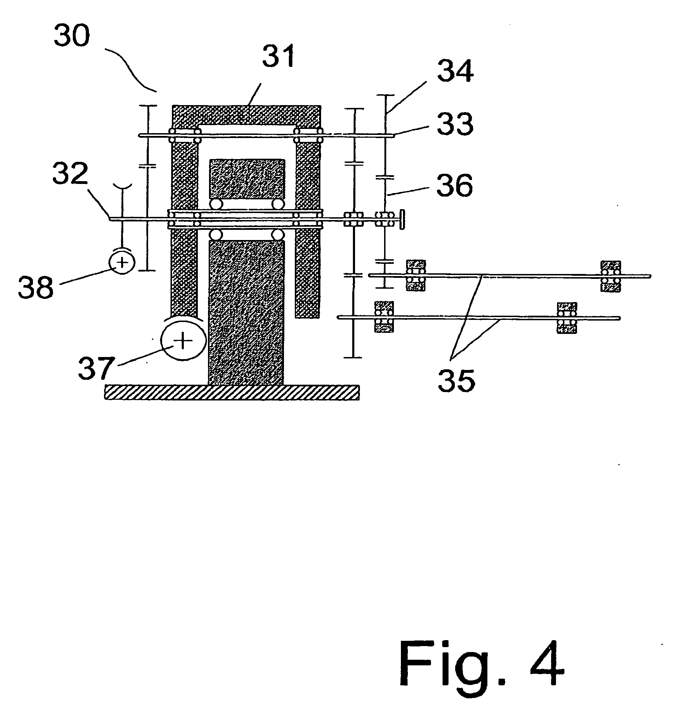

Fig. 4 zeigt eine schematische Darstellung eines Querschnitts eines Neigungsmechanismus 30. Der Neigungsmechanismus 30 umfasst einen Schwenkexzenterrahmen 31. Der Schwenkexzenterrahmen 31 weist eine Getriebewelle 32 auf, welche von einem Hauptmotor 38 angetrieben wird, wobei der Schwenkexzenterrahmen 31 um die Getriebewelle 32 stufenlos schwenkbar gelagert ist. Beispielsweise kann mittels eines Stellmotors 37 der Schwenkexzenterrahmen 31 stufenlos geschwenkt werden. Die Getriebewelle 32 ist mit einer Welle 33 gekoppelt, beispielsweise mittels Zahnräder. Die von dem Motor gelieferte Antriebskraft wird somit in eine Drehbewegung der Welle 33 gewandelt. Die Welle 33 ist mit abgestuften Planetenzahnrädern eines Planetengetriebes 34 gekoppelt, so dass die Planetenzahnräder mit einer Antriebsdrehzahl der Welle 33 rotieren. Transmissionswellen 35 mit Antriebsrädern 36 sind an das Planetengetriebe 34 gekoppelt, wobei die Antriebsräder 36 achsfluchtend, aber ungekoppelt, das heißt frei drehbar untereinander, an der Getriebewelle 32 angeordnet sind. Die Antriebsräder 36 rotieren somit mit der Antriebsdrehzahl der Welle 33 und entsprechend ihrer Getriebestufung gleich ihres Über- / Untersetzungsverhältnisses. Wird der Schwenkexzenterrahmen 31 geschwenkt, rotieren aufgrund einer Abrollbewegung der Planetenzahnräder die Antriebsräder 36 während einer zeitlichen Dauer der Abrollbewegung mit unterschiedlichen Drehgeschwindigkeiten. Die Antriebsräder 36 sind mittels eines Transmissionsgetriebes (nicht gezeigt), beispielsweise eines Zahnriemengetriebes, mit Exzenterbauteilen (nicht gezeigt) einer Mehrfachexzenteranordnung (nicht gezeigt) gekoppelt. Somit werden die unterschiedlichen Drehgeschwindigkeiten der Antriebsräder 36 auf die Exzenterbauteile übertragen, wodurch sich die Exzenterbauteile gegenläufig und mit unterschiedlichen Drehgeschwindigkeiten drehen, was ein Neigen einer räumlichen Lage der Verbindungsgeraden zwischen zwei Endstellungen einer oszillierenden Bewegung eines Strömungsprofilkörpers (nicht gezeigt) zur Folge hat.

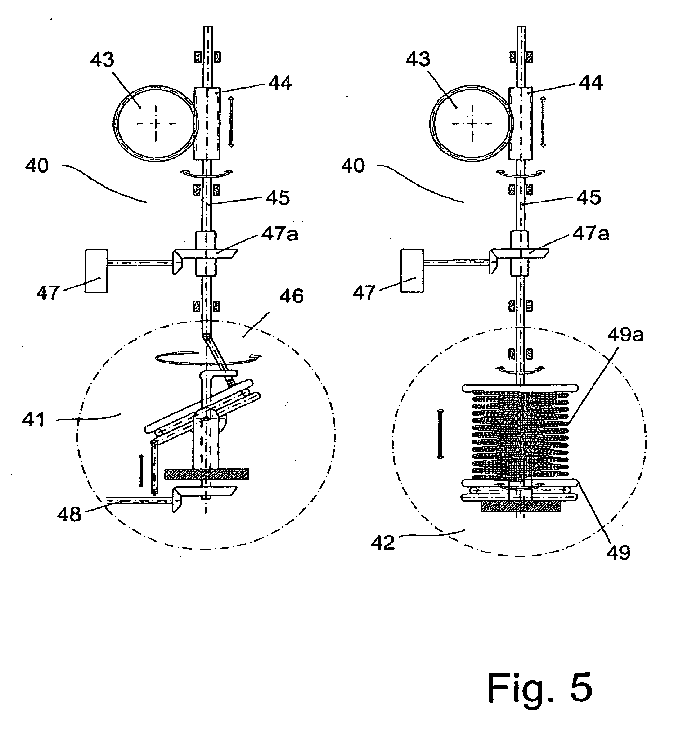

Fig. 5 zeigt in der linken Abbildung eine schematische Darstellung eines Einstellmechanismus 40 und eines Schwenkmechanismus 41. Die rechte Abbildung zeigt eine schematische Darstellung des gleichen Einstellmechanismus 40 und eines anderen Schwenkmechanismus 42.

Der Einstellmechanismus 40 umfasst ein Antriebsrad 43 eines kaskadenförmigen Wechselgetriebes (nicht gezeigt), an welchem ein Strömungsprofilkörper (nicht gezeigt) gekoppelt ist. Das Antriebsrad 43 wirkt mit einem Schneckenrad 44 zusammen, wobei das Schneckenrad 44 an einer Hubstange 45 angeordnet ist. Die Hubstange 45 weist in einem Gleitbereich ein Profil bzw. einen Profilkörper (nicht gezeigt) auf. Beispielsweise ist der Profilkörper als ein Dreikant-Außenprofil gebildet. Mittig des Gleitbereichs und zentrisch zu der Mittelachse der Hubstange 45 ist ein Getrieberad 47a mit einem Gegenprofil, beispielsweise ein Dreikant-Innenprofil, als Achsbohrung angeordnet, durch die die Hubstange 45 hin- und her gleiten kann. Wenn das Getrieberad 47a gedreht wird, beispielsweise mittels eines Stellmotorantriebs 47, so wirkt das Profil mit dem Gegenprofil derart zusammen, dass die Drehbewegung des Getrieberads 46 in eine Drehbewegung der Hubstange 45 gewandelt wird. Die Drehbewegung der Hubstange 45 wird dann mittels des Schneckenrades 44 in eine Drehbewegung des Antriebsrads 43 des kaskadenförmigen Wechselgetriebes gewandelt, wodurch die Lage einer Längsachse eines Querschnittsprofils des Strömungsprofilkörpers relativ zu einer Verbindungsgeraden zwischen den zwei Endstellungen der oszillierenden Bewegung eingestellt werden kann.

Der Schwenkmechanismus 41 umfasst ebenfalls das Antriebsrad 43 und die Hubstange 45. Weiterhin weist der Schwenkmechanismus 42 einen Taumelscheibenantrieb 46 auf, welcher von einem Hauptmotorantrieb 48 angetrieben wird. Der Taumelscheibenantrieb 46 ist mit der Hubstange 45 gekoppelt und liefert eine translatorische, das heißt in Richtung der Mittelachse der Hubstange 45, oszillierende Bewegung. Diese translatorische oszillierende Bewegung wird mittels des Schneckenrads 44 in eine oszillierende Drehbewegung des Antriebsrads 43 gewandelt, wodurch der oszillierenden Bewegung des Strömungsprofilkörpers zwischen den Endstellungen eine Schwenkbewegung um eine Querachse überlagert wird.

Wird die Hubstange 45 weder gedreht noch in Richtung der Mittelachse verschoben, verbleibt der Strömungsprofilkörper während seiner oszillierenden Bewegung immer in der gleichen Lage.

Der in der rechten Darstellung in Fig. 5 gezeigte andere Schwenkmechanismus 42 umfasst ein Federsystem 49 mit einer Feder 49a, welches mit der Hubstange 45 gekoppelt ist. Der Strömungsprofilkörper wird bei seiner oszillierenden Bewegung durch ein Medium Strömungskräften ausgesetzt, wodurch der Strömungsprofilkörper aus einer Ruhelage bzw. Gleichgewichtslage verlagert wird. Diese Verlagerungsbewegung wird mittels des Schneckenrads 44 in eine translatorische Bewegung der Hubstange 45 gewandelt. Die translatorische Bewegung dehnt und / oder staucht die Feder 49a, wodurch eine rückwirkende Federkraft bzw. eine Rückstellkraft gebildet wird. Das Federsystem 49 bildet somit einen harmonischen Oszillator im Sinne der klassischen Mechanik. Die von dem harmonischen Oszillator gelieferte Oszillation wird mittels des Schneckenrads 44 auf das Antriebsrad 43 und schließlich auf den Strömungsprofilkörper übertragen.

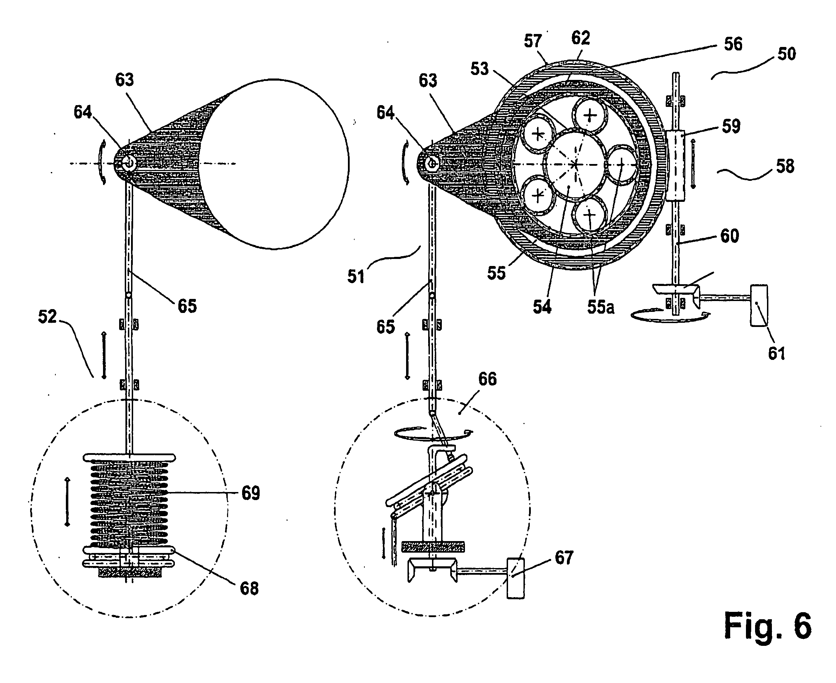

Fig. 6 zeigt in der rechten Darstellung einen weiteren Einstellmechanismus 50 und einen weiteren Schenkmechanismus 51. Die linke Darstellung in Fig. 6 zeigt einen alternativen Schwenkmechanismus 52.

Der weitere Einstellmechanismus 50 umfasst ein Antriebsrad 53 eines kaskadenförmigen Wechselgetriebes (nicht gezeigt), wobei das Antriebsrad 53 als ein zentrales außenverzahntes Stirnrad 54 (Sonnenrad) eines Planetenradgetriebes 55 gebildet ist, welches mit um das Stirnrad 54 (Sonnenrad) angeordneten Planetenräder 55a zusammenwirkt. Ein Strömungsprofilkörper (nicht gezeigt) ist mit dem kaskadenförmigen Wechselgetriebe gekoppelt. Die jeweiligen Achsen der Planetenräder 55a sind an einem Grundkörper 56 eines Schneckenrades 57 eines Schneckenradgetriebes 58 starr befestigt. Das Schneckenrad 57 ist zentrisch fluchtend und drehbar zur Achse des Antriebsrades 53 angeordnet. Angetrieben wird das Schneckenrad 57 von einer Schnecke 59, welche über eine Welle 60 mit Drehbewegungen von einem Stellantrieb 61 beaufschlagt werden kann. Mittels Drehen der Welle 60 wird das Schneckenrad 57 gedreht und somit entsprechend dem Übersetzungsverhältnis des Schneckenradgetriebes 58 und des Planetengetriebes 55 das Antriebsrad 53 des kaskadenförmigen Wechselgetriebes gedreht und schließlich die Lage einer Längsachse eines Querschnittsprofils des Strömungsprofilkörpers eingestellt.

Der weitere Schwenkmechanismus 51 umfasst ebenfalls das Planetenradgetriebe 55. Weiterhin weist der weitere Schwenkmechanismus 51 ein innenverzahntes Ringzahnrad 62 mit einem exzentrisch auskragendem Nockenhebel 63 auf, wobei die inneren Zähne mit den Planetenräder 55 zusammenwirken. An dem Nockenhebel 63 ist eine Öse 64 gebildet, an welcher eine weitere Hubstange 65 gelenkig angeordnet ist. Eine translatorische, das heißt in Richtung der Mittelachse der weiteren Hubstange 65, oszillierende Bewegung wird mittels des Planetengetriebes 55 in eine oszillierende Drehbewegung des Antriebsrads 53 des kaskadenförmigen Wechselgetriebes gewandelt, wodurch einer oszillierenden Bewegung des Strömungsprofilkörpers zwischen zwei Endstellungen eine Schwenkbewegung um seine Querachse überlagert wird. Die translatorische oszillierende Bewegung wird bei dem weiteren Schwenkmechanismus 51 mittels eines weiteren Taumelscheibenantriebs 66 geliefert, welcher von einem weiteren Hauptantrieb 67 angetrieben wird.

Der in der linken Darstellung in Fig. 6 gezeigte alternative Schwenkmechanismus 52 umfasst anstatt des weiteren Taumelscheibenantriebs 66 ein weiteres Federsystem 68 mit einer Feder 69, welches mit der weiteren Hubstange 65 gekoppelt ist, wobei das weitere Federsystem 68 wie das in Fig. 5 gezeigte Federsystem 49 wirkt.

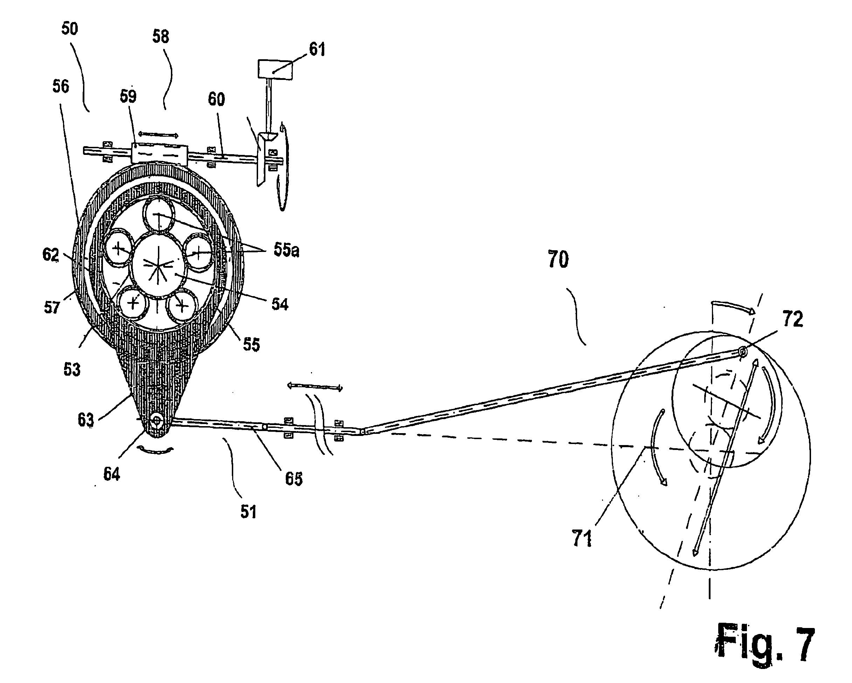

Fig. 7 zeigt eine schematische Darstellung einer weiteren Ausführungsform eines Schwenkmechanismus. Für gleiche Merkmale werden in Fig. 7 die gleichen Bezugszeichen wie in den Fig. 5 und 6 verwendet. Der Schwenkmechanismus 70 in Fig. 7 umfasst anstelle des weiteren Federsystems 68 bei der Ausführungsform in Fig. 6 einen Doppelexzenter-Kurbelantrieb 71, welcher mit der weiteren Hubstange 65 gekoppelt ist. Die Bewegung eines Kurbelzapfens 72 erfolgt oszillierend auf einer vorzugsweise geraden Bahnlinie und mit der gleichen Frequenz wie die oszillierende Hubbewegung des Oszillationsflügels, jedoch mit einer vorzugsweise Phasenverschiebung von etwa 90° vorauseilend. Der Doppelexzenter-Kurbelantrieb 71 ist hierfür im Wesentlichen analog dem Doppelexzenter-Flügelantrieb aufgebaut und kann mit der gleichen Drehzahl beaufschlagt werden. Zur Sicherstellung einer stufenlosen Einstellung der Hubweite der Hubstange 65 kann die gerade Bahnlinie des Kurbelzapfens 72 stufenlos geschwenkt werden. Letzteres geschieht mittels eines weiteren OszillationsebenenSchwenkgetriebes analog dem des Flügelhubantriebs.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Propellervorrichtung, mit einem einem Propeller zugeordneten Strömungsprofilkörper (7; 11) und einer an den Strömungsprofilkörper (7; 11) funktionell gekoppelten Mehrfachexzenteranordnung (2), die zwei miteinander gekoppelte und gegenläufig drehbare Exzenterbauteile (3, 4; 12, 13) aufweist und die konfiguriert ist, eine gemeinsame, gegenläufige Drehbewegung der Exzenterbauteile (3, 4; 12, 13) in eine oszillierende Bewegung des Strömungsprofilkörpers (7; 11) entlang einer Bewegungsbahn zwischen zwei Endstellungen zu wandeln, und umgekehrt, wobei die Bewegungsbahn einer geradlinigen Bewegung oder ellipsenförmige Bewegung entsprechend gebildet ist.

2. Propellervorrichtung nach Anspruch 1, **dadurch gekennzeichnet, dass** die Exzenterbauteile (3, 4; 12, 13) mit gleicher Exzentrizität gelagert sind.

3. Propellervorrichtung nach Anspruch 1 oder 2, **gekennzeichnet durch** einen Einstellmechanismus (40; 50), der konfiguriert ist, die Lage einer Längsachse eines Querschnittsprofils des Strömungsprofilkörpers (7; 11) relativ zu einer Verbindungsgerade zwischen den zwei Endstellungen einzustellen.

4. Propellervorrichtung nach Anspruch 3, **dadurch gekennzeichnet, dass** der Strömungsprofilkörper (7; 11) mit einem kaskadenförmigen Wechselgetriebe (18) gekoppelt ist.

5. Propellervorrichtung nach Anspruch 3 oder 4, **dadurch gekennzeichnet, dass** der Einstellmechanismus (40; 50) ein Planetengetriebe (34; 55) umfasst.

6. Propellervorrichtung nach mindestens einem der vorangehenden Ansprüche, **dadurch gekennzeichnet, dass** die Lage der Längsachse des Querschnittsprofils des Strömungsprofilkörpers (7; 11) relativ zu der Verbindungsgeraden zwischen den zwei Endstellungen bei der oszillierenden Bewegung feststehend gebildet ist.

7. Propellervorrichtung nach mindestens einem der vorangehenden Ansprüche, **gekennzeichnet durch** einen Schwenkmechanismus (41; 42; 50; 52), der konfiguriert ist, der oszillierenden Bewegung des Strömungsprofilkörpers (7; 11) zwischen den Endstellungen eine Schwenkbewegung der Längsachse des Querschnittsprofils des Strömungsprofilkörpers (7; 11) um eine Mittellage der Längsachse zu überlagern.

8. Propellervorrichtung nach Anspruch 7, **dadurch gekennzeichnet, dass** der Schwenkmechanismus (41; 42; 50; 52) ein Dämpfungssystem und / oder ein Federsystem (49, 49a; 68, 69) aufweist.

9. Propellervorrichtung nach mindestens einem der vorangehenden Ansprüche, **gekennzeichnet durch** einen Neigungsmechanismus (30), der konfiguriert ist, eine räumliche Lage der Verbindungsgeraden zwischen den Endstellungen einzustellen.

10. Propellervorrichtung nach Anspruch 9, **dadurch gekennzeichnet, dass** der Neigungsmechanismus (30) konfiguriert ist, eine jeweilige Drehgeschwindigkeit der Exzenterbauteile (3, 4; 12, 13) getrennt voneinander einzustellen.

11. Propellervorrichtung nach mindestens einem der vorangehenden Ansprüche, **dadurch gekennzeichnet, dass** die Mehrfachexzenteranordnung (2) zwei weitere miteinander gekoppelte und gegenläufig drehbare Exzenterbauteile (5, 6; 14, 15) aufweist, wobei der Strömungsprofilkörper (7; 11) zwischen den zwei Exzenterbauteilen (3, 4; 12, 13) und den zwei weiteren Exzenterbauteilen (5, 6; 14, 15) angeordnet ist.

12. Propellervorrichtung nach mindestens einem der vorangehenden Ansprüche, **dadurch gekennzeichnet, dass** der Strömungsprofilkörper (7; 11) einer Tragfläche oder eines Tragflügel entsprechend gebildet ist.

13. Fahrzeugantriebseinrichtung mit einer Propellervorrichtung nach mindestens einem der vorangehenden Ansprüche.

14. Energieumwandlungseinrichtung mit einer Propellervorrichtung nach mindestens einem der Ansprüche 1 bis 12.

## Claims

1. A propeller device with a flow profile body (7, 11) assigned to a propeller and a multiple eccentric arrangement (2) functionally coupled to the flow profile body (7, 11), which has two eccentric components (3, 4) coupled with one another and able to rotate in opposite directions, and which is configured so as to convert a common rotational movement of the eccentric components (3, 4; 12, 13) in opposite directions into an oscillating movement of the flow profile body (7, 11) along a movement path between two end positions, and vice versa, wherein the movement path is appropriately formed from a movement selected from the following group of movements: a linear movement and an elliptical movement.

2. The propeller device in accordance with Claim 1, **characterised in that** the eccentric components (3, 4; 12, 13) are mounted with the same eccentricity.

3. The propeller device in accordance with claim 1 or 2, **characterised by** an adjustment mechanism (40; 50), which is configured so as to adjust the attitude of a longitudinal axis of a cross-sectional profile of the flow profile body (7; 11) relative to a straight line connecting between the two end positions.

4. The propeller device in accordance with Claim 3, **characterised in that** the flow profile body (7; 11) is coupled with a cascade-type change speed transmission (18).

5. The propeller device in accordance with Claim 3 or 4, **characterised in that** the adjustment mechanism (40; 50) comprises a planetary transmission (34; 55).

6. The propeller device in accordance with at least one of the preceding claims, **characterised in that** the attitude of a longitudinal axis of a cross-sectional profile of the flow profile body (7; 11) relative to the straight line connecting between the two end positions is designed to be stationary during the oscillating movement.

7. The propeller device in accordance with at least one of the preceding claims, **characterised by** a pivoting mechanism (41; 42; 50; 52), which is configured to overlay the oscillating movement of the flow profile body (7; 11) between the end positions with a pivotal movement of the longitudinal axis of the cross-sectional profile of the flow profile body (7; 11) about a central attitude of the longitudinal axis.

8. The propeller device in accordance with Claim 7, **characterised in that** the pivotal mechanism (41; 42; 50; 52) has a damping system and/or a spring system (49, 49a; 68, 69).

9. The propeller device in accordance with at least one of the preceding claims, **characterised by** a tilting mechanism (30), which is configured to adjust a spatial location of the straight line connecting between the end positions.

10. The propeller device in accordance with Claim 9, **characterised in that** the tilting mechanism (30) is configured to adjust the respective rotational speeds of the eccentric components (3, 4; 12, 13) separately from one another.

11. The propeller device in accordance with at least one of the preceding claims, **characterised in that** the multiple eccentric arrangement (2) has two further eccentric components (5, 6; 14, 15), coupled with one another and able to rotate in opposite directions, wherein the flow profile body (7; 11) is arranged between the two eccentric components (3, 4; 12, 13) and the two further eccentric components (5, 6; 14, 15).

12. The propeller device in accordance with at least one of the preceding claims, **characterised in that** the flow profile body (7; 11) is designed as a lifting surface or a wing.

13. A vehicle drive device with a propeller device in accordance with at least one of the preceding claims.

14. An energy conversion device with a propeller device in accordance with at least one of the Claims 1 to 12.

## Revendications

1. Dispositif d'hélice comprenant un corps profilé d'écoulement (7 ; 11) attribué à une hélice et un agencement d'excentriques multiples (2) couplé de manière fonctionnelle au corps profilé d'écoulement (7 ; 11) qui présente deux pièces excentrées (3, 4 ; 12, 13) couplées entre elles et pouvant tourner de manière opposée et qui est configuré pour transformer un mouvement de rotation commun de manière opposée des pièces excentrées (3, 4 ; 12, 13) en un mouvement oscillant du corps profilé d'écoulement (7 ; 11) le long d'une trajectoire de mouvement entre deux positions de fin de course, et inversement, sachant que la trajectoire de mouvement est formée conformément à un mouvement linéaire ou en ellipse.

2. Dispositif d'hélice selon la revendication 1, **caractérisé en ce que** les pièces excentrées (3, 4 ; 12, 13) sont disposées avec la même excentricité.

3. Dispositif d'hélice selon la revendication 1 ou 2, **caractérisé par** un mécanisme de réglage (40 ; 50) qui est configuré pour régler la position d'un axe longitudinal d'un profil transversal du corps profilé d'écoulement (7 ; 11) par rapport à une droite de liaison entre les deux positions de fin de course.

4. Dispositif d'hélice selon la revendication 3, **caractérisé en ce que** le corps profilé d'écoulement (7 ; 11) est couplé à un engrenage à changement de vitesses (18) en cascade.

5. Dispositif d'hélice selon la revendication 3 ou 4, **caractérisé en ce que** le mécanisme de réglage (40 ; 50) comprend un engrenage planétaire (34 ; 55).

6. Dispositif d'hélice selon au moins l'une des revendications précédentes, **caractérisé en ce que** la position de l'axe longitudinal du profil transversal du corps profilé d'écoulement (7 ; 11) est fixe par rapport à la droite de liaison entre les deux positions de fin de course lors du mouvement oscillant.

7. Dispositif d'hélice selon au moins l'une des revendications précédentes, **caractérisé par** un mécanisme de pivotement (41 ; 42 ; 50 ; 52) qui est configuré pour superposerau mouvement oscillant du profilé d'écoulement (7 ; 11) entre les positions de fin de course, un mouvement de pivotement de l'axe longitudinal du profil transversal du corps profilé d'écoulement (7 ; 11) autour d'une position médiane de l'axe longitudinal.

8. Dispositif d'hélice selon la revendication 7, **caractérisé en ce que** le mécanisme de pivotement (41 ; 42 ; 50 ; 52) est un système d'amortissement et/ou un système sur ressorts (49, 49a ; 68, 69).

9. Dispositif d'hélice selon au moins l'une des revendications précédentes, **caractérisé par** un mécanisme d'inclinaison (30) qui est configuré pour régler une position spatiale de la droite de liaison entre les positions de fin de course.

10. Dispositif d'hélice selon la revendication 9, **caractérisé en ce que** le mécanisme d'inclinaison (30) est configuré pour régler séparément entre elles une vitesse de rotation respective des pièces excentrées (3, 4 ; 12, 13).

11. Dispositif d'hélice selon au moins l'une des revendications précédentes, **caractérisé en ce que** l'agencement d'excentriques multiples (2) présente deux autres pièces excentrées (5, 6 ; 14, 15) couplées entre elles et pouvant tourner de manière opposée, sachant que le corps profilé d'écoulement (7 ; 11) est disposé entre les deux pièces excentrées (3, 4 ; 12, 13) et les deux autres pièces excentrées (5, 6 ; 14, 15).

12. Dispositif d'hélice selon au moins l'une des revendications précédentes, **caractérisé en ce que** le corps profilé d'écoulement (7 ; 11) est formé conformément à une surface porteuse ou une aile porteuse.

13. Dispositif d'entraînement de véhicule comprenant un dispositif d'hélice selon au moins l'une des revendications précédentes.

14. Dispositif de conversion de l'énergie comprenant un dispositif d'hélice selon au moins l'une des revendications 1 à 12.
